# EUROPEAN PATENT SPECIFICATION

(11) **EP 1 339 925 B1**
(45) Date of publication and mention of the grant of the patent: **20.04.2005**
(21) Application number: 01979119.3
(22) Date of filing: 16.10.2001
(51) Int. Cl.: E04B 2/74, G09F 9/00

(54) **FRAMEWORK FOR PLANE CONSTRUCTION ELEMENTS**
GRUNDRAHMEN FÜR FLACHE KONSTRUKTIONSELEMENTE
BATI POUR ELEMENTS DE CONSTRUCTION PLANS

(30) Priority: 18.10.2000 NO 20005245
(43) Date of publication of application: 03.09.2003
(73) Proprietor: VILNES, Dag, N-3132 Husoysund (NO)
(72) Inventor: VILNES, Dag, N-3132 Husoysund (NO)
(74) Representative: Hammler, Martin Franz
(86) International application number: PCT/NO2001/000417
(87) International publication number: WO 2002/033189

(56) References cited:
- EP-A1- 0 914 011
- US-A- 4 279 288
- US-A- 5 400 178
- US-A- 5 461 510
- US-A- 6 128 877

## Description

The present invention relates to a frame construction for fixing a plurality of substantially flat panel structures in a matrix relation. The frame construction consists of a plurality of horizontal frame members and a plurality of vertical frame members, which horizontal and vertical frame members form a matrix of openings in the frame construction in which the panel structures can be removably inserted in that the openings can be adjusted in size to facilitate the insertion or removal of the removable panel structures. The frame construction will be especially useful when constructing a matrix arrangement of, for example, display faces which together form a "giant screen" or, for example, solar cell panels which are usually made having a limited area and which also can be assembled by using the present frame construction to form a much larger total area.

It is previously known to use display elements or display faces which are assembled in a desired number in a matrix to form a so-called giant screen. However, the display elements or faces in such a structure must be placed in a precise matrix relation where, for instance, the space between adjacent elements in the horizontal and vertical direction must be within certain tolerances for the sake of the appearance of the giant screen from a distance. If the space between the elements is too great, the giant screen will be seen as a checker work, whilst it is necessary to use a frame construction to hold the elements in a matrix form which is sufficiently strong and sufficiently rigid to give the complete giant screen, including all the display elements, the necessary degree of structural strength and safety, and also to ensure that the screen will be perceived as straight in the horizontal direction and indeed also in the vertical direction.

Today, in connection with existing giant screen solutions, there are also a number of factors that affect existing frame constructions and existing complete giant screen structures. For instance, existing display elements often have their own power supply in addition to each element often having a separate climate control including cooling/heating to maintain the back of the element containing electronic circuits etc at a constant acceptable working temperature. Furthermore, air humidity and particle content are also controlled. These solutions contribute substantially to increased weight for each element, which in turn means that the frame construction must be stronger and more rigid if a giant screen is to be constructed. One of the results of this is that there are clear limits to the size of existing giant screen solutions, and in addition the frame construction balances between a design to obtain sufficient strength and rigidity, and on the other hand the necessity of meeting the requirement of a correct space between each screen element.

Furthermore, such existing giant screen solutions are largely used outdoors, and in such cases it is necessary to establish a climate-tight chamber for each module in the matrix-shaped frame construction in order to prevent, for instance, penetration of water from the front of the giant screen. In this way, coolant can also be circulated on the back of the structure without "leaking" through the structure.

As an example of previously known frame constructions used in connection with a giant screen, mention can be made of the solution disclosed in the applicant's own patent NO 174990 where a framework is built up of horizontally and vertically intersecting bars and an external frame construction extending along the periphery of the framework. The outer frame construction is further divided so that it is possible to obtain coordinated orthogonal movement of the various intersecting bars in that the outer frame construction is divided essentially into four corner elements that can be drawn apart. The openings formed between the horizontal bars thus are opened, and it will be possible to insert or remove one or more display elements between the bars. However, the solution is based on the horizontal and vertical bars extending orthogonally within a surrounding frame where the horizontal and vertical bars also move through the outer frame in suitable openings, which openings are of varying size in order to provide a steady displacement of the horizontal and vertical elements in the respective orthogonal directions. Furthermore, the structure is heavy, in part because the surrounding frame and the pattern of movement are relatively complex where the horizontal and vertical bars pass through the outer frame, which also renders the structure vulnerable in relation to reliability in use.

Furthermore, US Patent 6059626 describes a method for manufacturing a large screen consisting of a plurality of flat display panels, where individual panels are fixed on a holder which is then fitted in a frame, which is not described further by a disclosure of its structural details.

Moreover, the international document WO 95/31876 describes a modular display system for fixing flat modular display panels such as liquid crystal panels within a frame which surrounds the panels. In addition, a covering sheet of glass can be placed in front of the display modules to protect them from the elements. The basis for this document is a frame construction that is heavy and impractical in relation to the vertical and horizontal movement required to create openings in the frame construction for the removal and insertion of the individual display modules. In addition, an all-over covering surface is used in front of the modules to protect them from the elements, which is expedient in relation to climate control also on the front of the modules, whereas in the present invention seals are used in the frame construction and at the horizontal and vertical members to provide an impenetrable front that protects against the penetration of water etc. This may optionally be combined with overpressure in climate-controlling air on the back of the modules.

Thus, it is an object of the present invention to provide a considerably lighter and simpler structure that obtains the same advantages with regard to weather resistance as the solution described in WO 95/31876.

In the said document, reference to the figures includes a reference to Figure 22 which further indicates how openings are formed in the frame and in the structure to give vertical and horizontal movements and also to slide the various modules together in a horizontal and vertical direction. Horizontal and vertical movement in this document are coordinated, whereas in the solution according to the present invention horizontal and vertical movement are separate.

On the basis of the solutions that are previously known from earlier documents including those mentioned above, it is an object of the present invention to provide a frame construction for fixing substantially flat display panels or elements in a matrix form that is much simpler in its structural design than previously known frame constructions. Furthermore, the structure is made in such a way that it can readily be assembled on site from the various members in order to then insert the respective display faces in the frame construction. This will yield considerable savings in relation to the transport and assembly of the frame construction, whilst it will be possible to construct on site a giant screen having the desired size by using relatively standardised elements that are extended to the desired dimension. Furthermore, it is an object of the invention that the individual display elements should be capable of being replaced individually if a fault develops in the individual elements.

It is also an object of the frame construction according to the invention that the frame construction should bear the weight and the load of the individual elements placed in the matrix, unlike the previously known solutions where the individual elements bear the load of the superjacent elements. This considerably reduces the requirement of structural strength of the individual panel elements and in turn reduces the weight of these elements, which again reduces the bearing capacity requirement of the frame construction.

Previously known solutions involving individual modules having climate control require diffusion-proof solutions, whilst the present solution only requires waterproof connections. It will be possible to provide an airflow on the back of the display elements which follows the giant screen and the display elements from the bottom to the top, and an overpressure will, among other things, help to keep unwanted substances out of the display modules. However, this requires that the frame construction according to the present invention should be provided with flow-limiting lateral edges and optionally a back wall. This will help to maintain a constant temperature on the back of the display face without there being any need for a separate cooling system, as is the case with today's known technology, which in turn will reduce the weight considerably. Today, the weight of a giant screen is often about 300-400 kg/m², whilst with the present invention it will be possible to reduce this to about 40-50 kg/m² if the potential of cooling across the whole of the back is also used.

It is a further object of the frame construction according to the present invention that it can be suspended from the top simply by attachment along the upper longitudinal edge of the frame construction, and in addition the frame construction may be supported along the lower longitudinal edge, if so desired. In these cases, the lower and upper longitudinal edges respectively are moved when the matrix form of the frame construction is to be opened to insert or remove individual display elements.

In addition, it is an object that the frame construction can be opened in the horizontal direction by moving just one of the outer vertical frame members.

To overcome the aforementioned problems and disadvantages associated with previously known solutions, and to meet the aforementioned objects, there is in accordance with the present invention provided a frame construction for fixing a plurality of panel structures in a matrix relation, which frame construction consists of a plurality of horizontal frame members and a plurality of vertical frame members. The horizontal and vertical frame members form a matrix having openings in the frame construction, in which openings the panel structures may be removably inserted. In a preferred embodiment of the present invention, the panel structures are essentially flat bodies comprising one or more display faces. In an alternative embodiment, the panel structures are essentially flat bodies comprising one or more solar cell panels. In accordance with the present invention, the vertical and/or horizontal frame members are extendable in their longitudinal direction at essentially each of the openings in the frame construction in that the extendable frame members are composed of a plurality of sub-members which can be mutually displaced in their longitudinal direction in relation to each other by one or more displacing mechanisms, and that the frame construction, at least at one of its outer edges, is connected to an elongate structural element which extends across at least parts of the respective outer edges of the frame construction, and that there is provided one or more motion-imparting mechanisms for the displacing means.

In accordance with one embodiment, the vertical sub-members are made in the form of elongate bodies having a through opening at each end in the longitudinal direction of the sub-members. The vertical sub-members in this connection are essentially flat. Furthermore, the sub-members in one embodiment are formed having a guide for the displacing means which, at least in one of the vertical frame members, extends through essentially the whole length of the frame member.

In another embodiment, the vertical sub-members are so positioned as to overlap one another at the through openings, so that the lower through opening in one sub-member overlaps the upper through opening in the subjacent member. Furthermore, the horizontal sub-members in this embodiment pass through the resulting overlapping openings in the vertical sub-members. In another embodiment, the horizontal members are complementarily designed at their opposite ends and overlap in an area at least corresponding to the largest desirable extension of the respective horizontal frame members at an opening in the frame construction.

In a preferred embodiment, the extent in the longitudinal direction of the whole opening formed by the overlapping openings at each end of the vertical sub-members is also essentially equivalent to the maximum extension in the longitudinal direction of one vertical frame member at each opening in the frame construction.

The complementary design of the horizontal sub-members includes a longitudinal opening in the longitudinal direction, preferably at the end of one member and a projection or a hook on the complementarily designed member which engages with the longitudinal opening, where the free travel of the projection or hook in the opening essentially corresponds to the extension of the horizontal frame member at the opening in the frame construction.

In another embodiment, the frame construction is at one of, or both of, its lateral edges, across the whole of or parts of the extent of the lateral edges, fitted with one or more covering structural elements extending in the opposite direction of the front of the panel structures in the frame construction. This is preferable in those cases where the frame construction is fitted with display faces without separate cooling, where it will be necessary, for example, to provide an airflow that moves along the back of the frame construction to cool the various display elements.

Similarly, in another embodiment, the frame construction, along the whole of or parts of the longitudinal extent of its upper side, is provided with one or more covering structural elements extending in the direction away from the front of the panel structures in the frame construction.

To be able move the horizontal and vertical frame members, the displacing means of the frame construction is formed by an elongate body or several successive elongate bodies such a wire, rope, cables or the like and the motion-imparting mechanism of the frame construction is a winch with a winch drum for coiling up the displacing means. In another embodiment, the displacing means of the frame construction is one or more racks and the motion-imparting mechanism of the frame construction is an associated rack gear. In various alternative embodiments, it is also possible to combine these in, for example, the horizontal and/or vertical direction. In other embodiments, the frame construction is also provided at its lower end with motion-imparting mechanisms for the displacing means.

To further facilitate the horizontal and/or vertical movement, the frame construction in an additional embodiment is at its lower horizontal frame member provided with rolling means that move along a guide located on an external structural element This can be done in different ways, but a preferred embodiment is to use a so-called travelling runner that moves along a rail, a hollow section or the like. In a similar way, one of or both of the outer vertical frame members of the frame construction can be provided with rolling means that move along a guide located on an external structural element. Furthermore, one or more of the frame members can be pretensioned in relation to one or more externally located structural elements, preferably by attaching a spring or the like. Elements considered as external structural elements in this case include surrounding wall structures or other forms of structural elements in relation to which the frame construction is located such as walls, ceilings, columns, masts or the like. It will also be possible to provide separate external structural elements specifically for each frame construction if so desired, e.g., latticework structures.

In the above, in different embodiments, possible solutions for the vertical and horizontal frame members are disclosed, and in additional alternative embodiments it will be possible to change these around, so that the solutions given for horizontal frame members can also be used for vertical frame members and vice versa.

However, in this connection it is desirable to obtain the desired degree of rigidity and structural strength in both vertical and horizontal frame members, and the constructions described above arc in this connection preferred embodiments as regards both rigidity and structural strength.

The frame construction in accordance with the present invention is also suitable for use with a plurality of solar cell panels that are arranged in a matrix form. The individual solar cell elements can be assembled in small groups, and these groups can in turn be placed in the openings in the matrix-shaped frame construction. In this connection, the frame construction in accordance with the present invention has very good properties as it is light and rigid, and it will thcrefore be possible to place a frame construction fitted with a plurality of solar cell panels on a pivotal base so that the frame construction and the solar cell panels can follow the movement of the sun across the sky throughout the day.

An example of a frame construction in accordance with the present invention, for fixing display modules to form a giant screen is further illustrated in the following detailed description with reference to the attached drawings, wheein:
Fig. 1 is a schematic illustration of a preferred embodiment of the frame construction in accordance with the present invention;
Figs. 2a-c show an alternative embodiment of the frame construction when "open";
Figs. 3a-c show the embodiment in Figs. 2a-c when "closed";
Fig. 4 shows in detail two successive horizontal frame members and a vertical frame member in a preferred embodiment, when "open";
Fig. 5 shows the detail in Fig. 4, when "closed";
Fig. 6a shows a detail of a vertical frame member; and
Fig. 6b shows a detail of a horizontal frame member as it intersects a vertical frame member.

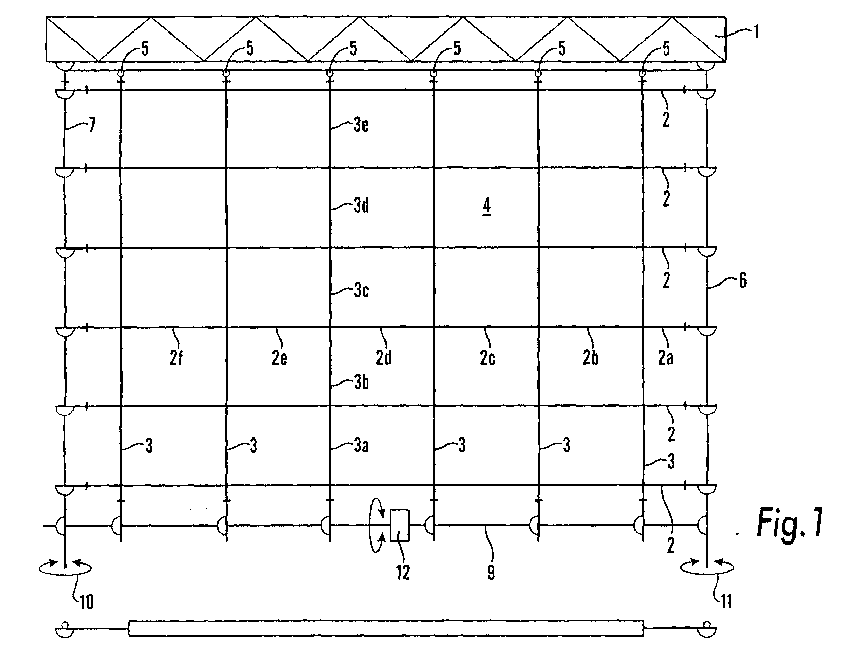

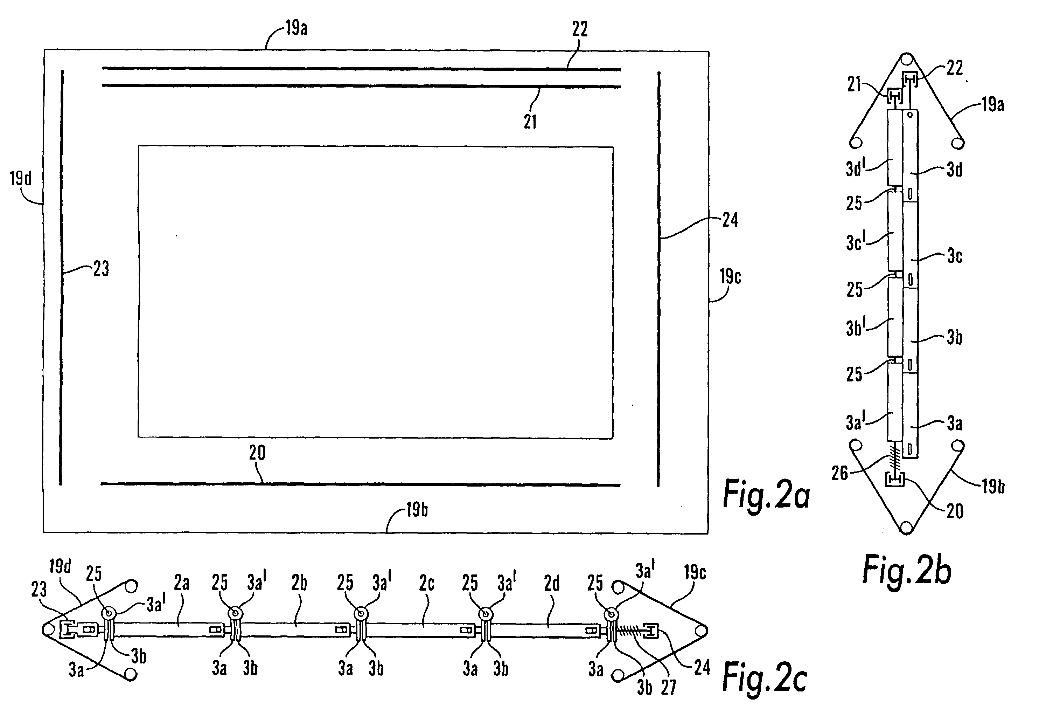

Fig. 1 is a schematic illustration of a frame construction in accordance with the present invention for fixing a plurality of panel structures in a matrix relation where the matrix is formed of vertical frame members 3 and horizontal frame members 2, which together form openings 4 for the insertion of the panel elements. To be able to open the matrix-shaped frame construction for insertion and removal of the panel elements, each of the frame members is made of interconnected sub-members, as illustrated in the vertical direction by the sub-members 3a-3e and in the horizontal direction by sub-members 2a-f. These sub-members can be mutually moved in relation to one another, and it will thus be possible to expose the frame construction members to orthogonal movement in the horizontal and vertical direction respectively which will open or extend the openings 4 in both the horizontal and vertical direction. In the preferred embodiment, as illustrated in, for instance, Figs. 2b and 2c, 3b and 3c and 4 and 5, the sub-members are so designed in relation to one another and so interconnected that the orthogonal movement in the longitudinal direction of the frame members is limited for each opening.

According to the present invention, the matrix of horizontal and vertical frame members is also along at least one of the outer edges connected to an elongate structural element that extends along the whole of or parts of the extent of the frame construction. As shown in Fig. 1, this structural element is made of a latticework I along the upper horizontal side of the frame construction. The vertical frame members are also internally or externally provided with displacing means that are used to move the various sub-members 3a to 3b in relation to one another. A displacing means of this kind may, for example, be an elongate body or several successive elongate bodies such as wire, rope, cables or the like that are connected to a motion-imparting mechanism which in the present case will be a winch with a winch drum for coiling up the displacing means. In alternative embodiments, the displacing means may be various forms of racks where the motion-imparting mechanism is an associated rack gear.

The various motion-imparting mechanisms are illustrated in Fig. 1 by means of a longitudinal drum shaft 8 which at the points 5 on the underside of the elongate structural element 1 is connected to the displacing means in connection with each of the vertical frame members 3.

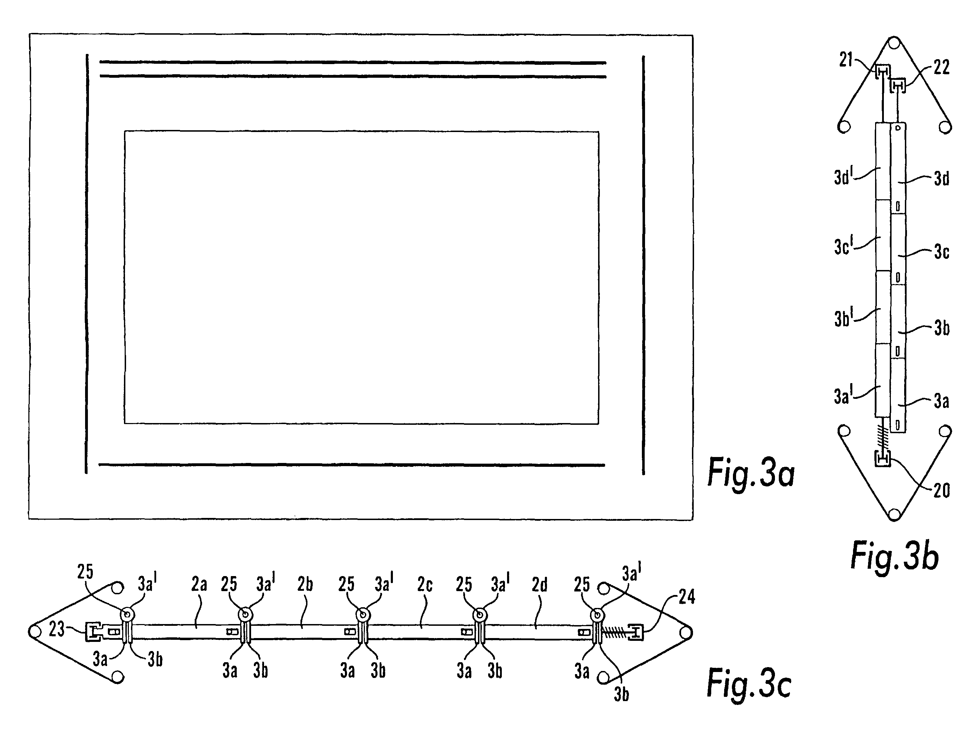

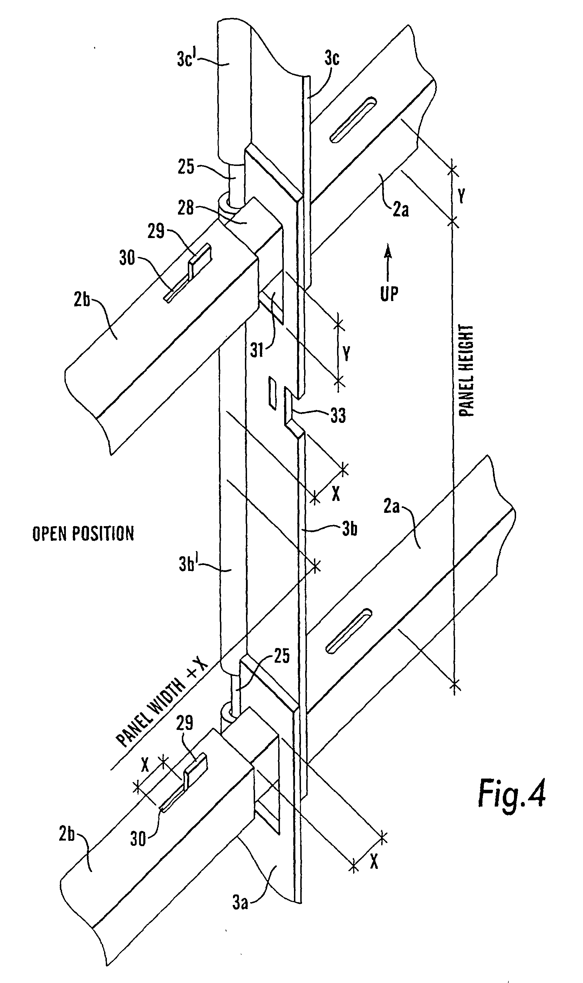

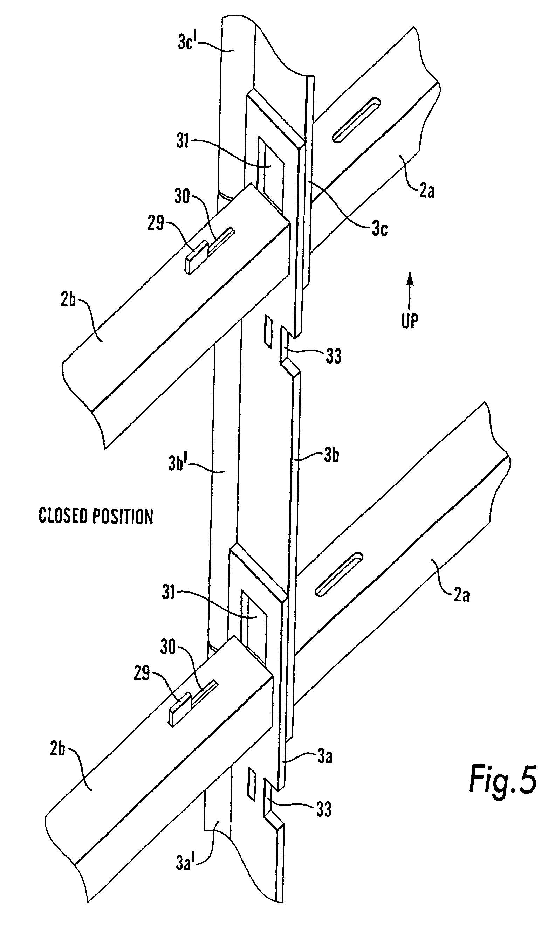

As shown in Figs. 2c and 3c, and also Figs. 4 and 5, the displacing means can be a wire 25 located internally in guides or sleeves along the vertical sub-members 3a-3e.

Similarly, the horizontal frame members consist of sub-members 2a-2f which can be mutually displaced relative to one another, the distance between them thus being variable. Consequently, it will be possible to "open" the horizontal extent of each of the openings 4 in the frame construction according to the present invention for insertion or removal of each of the panel structures. In this connection, motion-imparting mechanisms are also provided at one of the vertical longitudinal ends of the frame construction, at least, and as shown in Fig. 1, motion-imparting mechanisms 6, 7 are provided respectively along each of the outer vertical longitudinal ends of the frame construction. These are in turn operated as shown by the arrows 10, 11 in a rotational motion which draws the sub-members 2a-2f apart or pushes them towards each other. In that connection, the total rotational motion of 10 and 11 respectively will correspond to the maximum displacement in the horizontal direction when the openings 4 in the frame construction are opened in the horizontal direction.

As shown in Fig. 1, provided at the lower longitudinal outer edge of the frame construction is a longitudinal motion-imparting shaft 9 driven by a motor 12 which together with the motion-imparting mechanism 8 controls a mutual displacement of the sub-members 3a-3e in the vertical direction. However, in alternative embodiments it will be satisfactory to use only a horizontal and a vertical motion-imparting mechanism.

Thus, it will be possible to suspend the frame construction as a flat structure below a structural element 1, which in connection with a giant screen may be an appropriate embodiment.

Figs. 2a, b and c show an alternative embodiment of the frame construction in the present invention. Fig. 2a is a schematic illustration of a display face in plan view from in front, and Figs. 2b and 2c show a side view and a top view of the frame construction according to the present invention. As shown in Fig. 2b, the vertical frame members consist of sub-members 3a, 3b, 3c and 3d with guides 3a', 3b', 3c' and 3d' or a through-going displacing means 25, which in the present case is a wire or the like. In addition, the displacing means 25 plays a very important structural role in that this means braces the vertical frame members and prevents them from collapsing under the load of the panel structures that are inserted in the openings in the matrix-shaped frame construction. Thus, the horizontal frame members each bear the panel structures that are placed above in accordance with the object of the invention, unlike in the previously known structures where the subjacent panel structure bears the weight and the load of the superjacent panel structure,

The embodiment shown in Figs. 2a, b and c is provided at its upper horizontal end with traveling runners which run in guides 21 and 22. These are shown in Fig. 2a, where the travelling runners with the guides are also covered by a longitudinal structural element 19a. Similarly, the horizontal underside of the frame construction is provided with travelling runners running in longitudinal guide 20. In addition, the displacing means 25 is provided with a spring means 26 at the attachment to the travelling runner at the guide 20, which spring 26 holds the displacing means 25 under constant tension. In this embodiment, the guide 22 for the travelling runner is movable in the vertical direction and is used to "open" and "close" the openings 4 in the matrix-shaped frame construction.

In a similar way, the horizontal frame members 2 are made up of sub-members 2a, 2b, 2c, 2d secured in travelling runners which move in guides 23 and 24 on each side of the frame construction. In addition, the attachment is provided with a spring member 27 that ensures pretensioning of the horizontal frame members. As shown in Fig. 2c, the horizontal and vertical frame members are joined together and the vertical frame members 3a with the guides 3a' for the displacing means 25 are shown in the peripheral area between each of the successive sub-members 2a, 2b, 2c and 2d.

As shown in Figs. 2a and 2c, the right-hand and the left hand vertical lateral edge of the frame construction is covered by the structural elements 19c and 19d.

Figs. 3a-c also show an embodiment of the frame construction according to the present invention, like that shown in Figs. 2a, b and c where the sub-members in the horizontal and vertical direction, 2a-2d and 3a-3d respectively, are drawn together in the "closed" position. In Fig. 3b it is also indicated that the travelling runner 22 (which is movable) has been displaced in the vertical direction.

Furthermore, it can be seen from Figs. 4 and 5, in perspective view, how the vertical and horizontal sub-members are configured in their intersecting areas in the preferred embodiment, as disclosed above. Fig. 4 shows the junction between each of the sub-members in the horizontal and vertical direction in the "open" position, whilst Fig. 5 shows the junctions in the "closed" position.

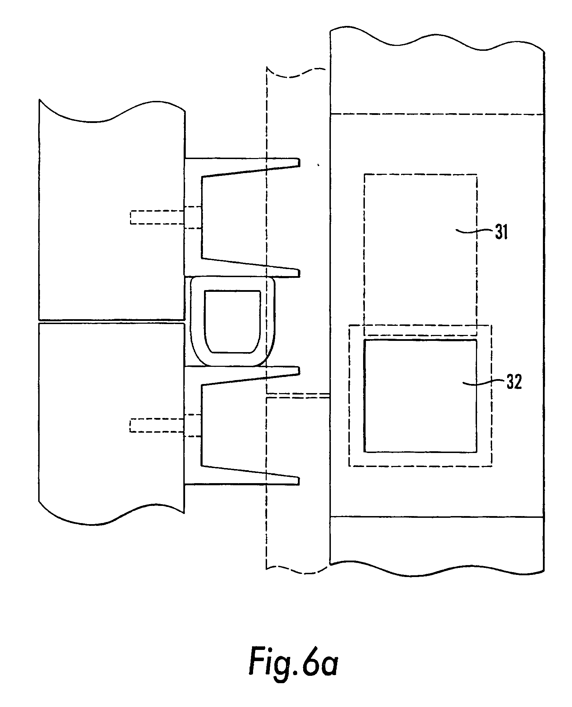

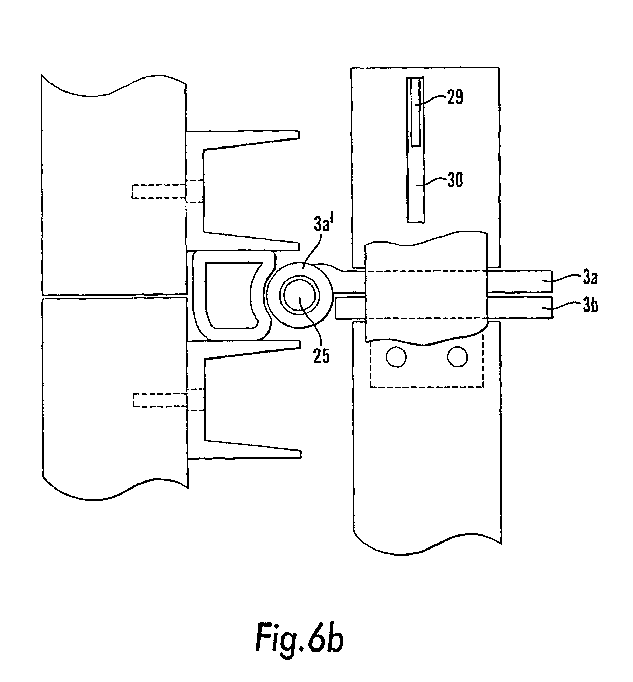

As shown in Figs. 4 and 5, the horizontal and vertical sub-members overlap at their respective ends. This can also be seen from Figs. 6a and 6b which in plan view from the side and from above respectively help to illustrate the preferred construction of the sub-members in the horizontal and vertical direction.

As shown in Figs. 4 and 5, the vertical sub-members 3a, 3b and 3c overlap each other at their respective end areas. The upper end of the sub-member 3b overlaps with the lower end of the sub-member 3c, and similarly the lower end of the sub-member 3b overlaps with the upper end of the sub-member 3a. The sub-members at their lower end are formed so as to have a relatively rectangular hole 32 (shown in Fig, 6a) and at their upper end they are formed so as to have an elongate opening 31 (also shown in Fig. 6a) which together on overlapping form a resultant opening through which the horizontal sub-members can be passed, which is particularly evident from Fig. 4. Thus, the extent of the elongate opening 31 sets a limit for the maximum movement in the vertical direction for each of the horizontal members, As shown in Figs. 2b, 2c, 3b, 3c, 4, 5 and 6b, the vertical sub-members 3a, 3b, 3c are also formed having guides 3a', 3b', 3c'for the displacing means 25.

In the horizontal direction, each sub-member at its opposing ends is complementarily designed so that the sub-members pass into each other and can be displaced in their longitudinal direction. In addition, the sub-members are provided with an elongate slot 30 that interacts with a projection 29 on the adjacent sub-member. The length of the slot 30 thus limits the displacement in the horizontal direction for each member.

The complementary design of the ends of the horizontal sub-members are shown in Fig. 4 with an inner part 28 that passes into the adjacent member.

As shown in Figs. 4 and 5, each sub-member in the vertical direction, in one embodiment, is also provided with a notch 33 or the like for removably inserting a panel structure comprising one or more display faces, or one or more solar cell panels.

In another alternative embodiment, the horizontal and vertical sub-members that are indicated in Figs. 4 and 5 can be replaced so that the horizontal sub-members 2a, 2b are used in the vertical direction and the vertical sub-members 3a, 3b and 3c are used in the horizontal direction. However, it is important that in particular the vertical sub-members which together form the vertical frame members attain a satisfactory structural rigidity so that the total frame construction does not collapse in the vertical direction. Furthermore, it is important that the horizontal sub-members have a structural design which ensures that these can support each individual panel structure that is placed above the individual horizontal sub-members.

Further variations and modifications of the design of the horizontal and vertical sub-members and the horizontal and vertical frame members will be fully possible, and in view of the scope of the protection set forth in the following independent patent claims, these will be considered to be obvious variations that also come within the scope of the protection.

## Claims

1. A frame construction for fixing a plurality of panel structures in a matrix relation, which frame construction consists of a plurality of horizontal frame members (2) and a plurality of vertical frame members (3), which horizontal and vertical frame members form a matrix of openings (4) in the frame construction, in which openings the panel structures can be removably inserted, the vertical and/or the horizontal frame members being extendable in their longitudinal direction at essentially each of the openings in the frame construction; **characterised in that** the extendable frame members are composed of a plurality of sub-members (2a-2d, 3a-3d) which can be mutually displaced in their longitudinal direction in relation to each other by one or more displacing means (25), and that the frame construction, at least at one of its outer edges, is connected to an elongate structural element (1) which extends across at least parts of the respective outer end of the frame construction, and that there are provided one or more motion-imparting mechanisms (6, 7, 8, 9) for the displacing means.

2. A frame construction according to claim 1, **characterised in that** the panel structures are essentially flat bodies comprising one or more display faces.

3. A frame construction according to claim 1, **characterised in that** the panel structures are essentially flat bodies comprising one or more solar cell panels.

4. A frame construction according to claims 1-3, **characterised in that** the vertical sub-members (3a-3d) are made in the form of elongate bodies having a through opening (31, 32) at each end in the longitudinal direction of the sub-member.

5. A frame construction according to claim 4, **characterised in that** the sub-members in the vertical and/or horizontal direction are formed having one or more longitudinal guides (2a, 2b, 2c, 2d, 3a', 3b', 3c') in the longitudinal direction for the whole of or parts of the displacing means (25).

6. A frame construction according to claims 1-5, **characterised in that** the displacing means (25) in one or more of the vertical frame members (3) extend through essentially the whole length of the frame member.

7. A frame construction according to claims 4-6, **characterised in that** the vertical sub-members (3a-3d) overlap each other with a through opening, so that the lower through opening (32) in one sub-member overlaps the upper through opening (31) in the subjacent member.

8. A frame construction according to claims 4-7, **characterised in that** the extent in the longitudinal direction of the total opening produced by the overlapping openings (31, 32) in each end of the vertical sub-members (3a-3d) essentially corresponds to the maximum extension in the longitudinal direction of a vertical frame member (3) at each opening (4) in the frame construction.

9. A frame construction according to claim 1, **characterised in that** the horizontal sub-members (2a, 2b, 2c, 2d) pass through the overlapping openings (31, 32) in the vertical sub-members (3a-3e).

10. A frame construction according to claim 9, **characterised in that** the horizontal sub-members (2a, 2b, 2c, 2d) are complementarily designed at their opposite ends and that they overlap across an area at least corresponding to the largest desirable extension of the respective horizontal frame members (2) at an opening (4) in the frame construction.

11. A frame construction according to claim 10, **characterised in that** the complementary design of the horizontal sub-members (2a, 2b, 2c, 2d) includes a longitudinal opening (30) in the longitudinal direction preferably at the end of a member and a projection or hook (29) on the complementarily designed member that engages with the longitudinal opening, where the free travel of the projection or hook in the opening corresponds to the extension of the horizontal frame member (3) at the opening (4) in the frame construction.

12. A frame construction according to claims 1-11, **characterised in that** the frame construction, at one of or both of its lateral edges, across the whole of or parts of the extent of the lateral edge, is provided with one or more covering structural elements (19c, 19d) extending in the direction away from the front of the panel structures in the frame construction.

13. A frame construction according to claims 1-12, **characterised in that** the frame construction along the whole of or parts of the longitudinal extent of the upper side is provided with one or more covering structural elements (19a) extending in the direction away from the front of the panel structures in the frame construction.

14. A frame construction according to claims 1-13, **characterised in that** the displacing means (25) of the frame construction is formed by an elongate body or several successive elongate bodies such as a wire, rope, cable or the like, and that the motion-imparting mechanism (6, 7, 8, 9) of the frame construction is a winch with a winch drum for coiling up the displacing means.

15. A frame construction according to claims 1-13, **characterised in that** the displacing means of the frame construction consists of one or more racks and that the motion-imparting mechanism of the frame construction is an associated rack gear.

16. A frame construction according to claims 1-15, **characterised in that** the frame construction at its lower edge is provided with a motion-imparting mechanism (9, 12) for the displacing means (25).

17. A frame construction according to claims 1-16, **characterised in that** upper ends of the vertical frame members (3) are provided with rolling means that move along a guide (21, 22) located on an external structural element.

18. A frame construction according to claims 1-17, **characterised in that** lower ends of the vertical frame members (3) are provided with rolling means that move along a guide (20) located on an external structural element.

19. A frame construction according to claims 1-18, **characterised in that** one end of, or both ends of, the horizontal frame members (2) of the frame construction are provided with rolling means that move along a guide (22, 24) located on an external structural element.

20. A frame construction according to claims 18-19, **characterised in that** one or more of the frame members (2, 3) are pretensioned in relation to one or more externally located structural elements.

## Patentansprüche

1. Rahmenkonstruktion zum Befestigen einer Vielzahl von Plattenstrukturen in einer Matrix-Beziehung, wobei die Rahmenkonstruktion aus einer Vielzahl horizontaler Rahmenelemente (2) und einer Vielzahl vertikaler Rahmenelemente (3) besteht, wobei horizontale und vertikale Rahmenelemente eine Matrix von Öffnungen (4) in der Rahmenkonstruktion bilden, in deren Öffnungen die Plattenstrukturen entfernbar eingesetzt werden können, wobei die vertikalen und/oder die horizontalen Rahmenelemente in ihrer longitudinalen Richtung, an im Wesentlichen jeder der Öffnungen in der Rahmenkonstruktion verlängerbar sind, **dadurch gekennzeichnet, dass** die verlängerbaren Rahmenelemente aus einer Vielzahl von Unterelementen (2a-2d, 3a-3d) zusammengesetzt sind, welche in ihrer longitudinalen Richtung in Beziehung zueinander durch eines oder mehrere Verschiebungsmittel (25) verschoben werden können, und dass die Rahmenkonstruktion bei mindestens einem ihrer äußeren Ränder mit einem länglichen Strukturelement (1) verbunden ist, welches sich mindestens über Teile des entsprechenden äußeren Endes der Rahmenkonstruktion erstreckt, und dass einer oder mehrere Bewegungserteil-Mechanismen (6, 7, 8, 9) für die Verschiebungsmittel bereitgestellt werden.

2. Rahmenkonstruktion gemäß Anspruch 1, **dadurch gekennzeichnet, dass** die Plattenstrukturen im Wesentlichen flache Körper sind, die eine oder mehrere Anzeigeflächen umfassen.

3. Rahmenkonstruktion gemäß Anspruch 1, **dadurch gekennzeichnet, dass** die Plattenstrukturen im Wesentlichen flache Körper sind, die eine oder mehrere Solarzellenplatten umfassen.

4. Rahmenkonstruktion gemäß den Ansprüchen 1 bis 3, **dadurch gekennzeichnet, dass** die vertikalen Unterelemente (3a-3d) in der Form von länglichen Körpern ausgebildet sind, die eine Durchgangsöffnung (31, 32) bei jedem Ende in der longitudinalen Richtung des Unterelements aufweisen.

5. Rahmenkonstruktion gemäß Anspruch 4, **dadurch gekennzeichnet, dass** die Unterelemente in der vertikalen und/oder horizontalen Richtung ausgebildet sind, wobei sie eine oder mehrere longitudinale Führungen (2a, 2b, 2c, 2d, 3a', 3b', 3c') in der longitudinalen Richtung für die gesamten oder Teile der Verschiebungsmittel (25) aufweisen.

6. Rahmenkonstruktion gemäß den Ansprüchen 1 bis 5, **dadurch gekennzeichnet, dass** sich die Verschiebungsmittel (25) in einem oder mehreren der vertikalen Rahmenelemente (3) im Wesentlichen über die gesamte Länge des Rahmenelements hindurch erstrecken.

7. Rahmenkonstruktion gemäß den Ansprüchen 4 bis 6, **dadurch gekennzeichnet, dass** die vertikalen Unterelemente (3a-3d) einander mit einer Durchgangsöffnung überlappen, so dass die untere Durchgangsöffnung (32) in einem Unterelement, die obere Durchgangsöffnung (31) in dem darunterliegenden Element überlappt.

8. Rahmenkonstruktion gemäß den Ansprüchen 4 bis 7, **dadurch gekennzeichnet, dass** die Ausdehnung in der longitudinalen Richtung der gesamten Öffnung, die durch die überlappenden Öffnungen (31, 32) in jedem Ende der vertikalen Unterelemente (3a-3d) erzeugt wird, im Wesentlichen der maximalen Ausdehnung in der longitudinalen Richtung eines vertikalen Rahmenelements (3) bei jeder Öffnung (4) in der Rahmenkonstruktion entspricht.

9. Rahmenkonstruktion gemäß dem Anspruch 1, **dadurch gekennzeichnet, dass** die horizontalen Unterelemente (2a, 2b, 2c, 2d) durch die Überlappungsöffnungen (31, 32) in die vertikalen Unterelemente (3a-3e) verlaufen.

10. Rahmenkonstruktion gemäß dem Anspruch 9, **dadurch gekennzeichnet, dass** die horizontalen Unterelemente (2a, 2b, 2c, 2d) an ihren gegenüberliegenden Enden komplementär ausgeführt sind und dass sie einen Bereich überlappen, der mindestens der größtmöglich gewünschten Ausdehnung der entsprechenden horizontalen Rahmenelemente (2) bei einer Öffnung (4) in der Rahmenkonstruktion entspricht.

11. Rahmenkonstruktion gemäß dem Anspruch 10, **dadurch gekennzeichnet, dass** die komplementäre Ausführung der horizontalen Unterelemente (2a, 2b, 2c, 2d) eine longitudinale Öffnung (30) in der longitudinalen Richtung, vorzugsweise an dem Ende eines Elements und einen Vorsprung oder Haken (29) auf dem komplementär ausgeführten Element beinhaltet, welches in die longitudinale Öffnung eingreift, wo die freie Bewegung des Vorsprungs oder Hakens in der Öffnung, der Ausdehnung des horizontalen Rahmenelements (3) an der Öffnung (4) in der Rahmenkonstruktion entspricht.

12. Rahmenkonstruktion gemäß den Ansprüchen 1 bis 11, **dadurch gekennzeichnet, dass** die Rahmenkonstruktion an einem oder an beiden ihrer lateralen Ränder, über die gesamte oder Teile der Ausdehnung des lateralen Randes mit einem oder mehreren Deckstrukturelementen (19c, 19d) bereitgestellt wird, welche sich in die Richtung der Front der Plattenstrukturen in die Rahmenkonstruktion hinweg erstrecken.

13. Rahmenkonstruktion gemäß den Ansprüchen 1-12, **dadurch gekennzeichnet, dass** die Rahmenkonstruktion entlang dem Ganzen oder Teilen der longitudinalen Ausdehnung der Oberseite mit einem oder mehreren Deckstrukturelementen (19a) bereitgestellt wird, die sich in die Richtung hinweg von der Front der Plattenstrukturen in die Rahmenkonstruktion erstrecken.

14. Rahmenkonstruktion gemäß den Ansprüchen 1-13, **dadurch gekennzeichnet, dass** die Verschiebungsmittel (25) der Rahmenkonstruktion durch einen länglichen Körper oder mehrere aufeinanderfolgende längliche Körper, wie einen Draht, Seil, Kabel oder der gleichen ausgebildet sind und dass der Bewegungserteil-Mechanismus (6, 7, 8, 9) der Rahmenkonstruktion eine Winde mit einer Windentrommel zum Aufwickeln der Verschiebungsmittel ist.

15. Rahmenkonstruktion gemäß den Ansprüchen 1-13, **dadurch gekennzeichnet, dass** die Verschiebungsmittel der Rahmenkonstruktion aus einer oder mehrerer Halterungen bestehen und dass der Bewegungserteil-Mechanismus der Rahmenkonstruktion eine hinzugeordnete Zahnstange ist.

16. Rahmenkonstruktion gemäß den Ansprüchen 1-15, **dadurch gekennzeichnet, dass** die Rahmenkonstruktion bei ihrem unteren Rand mit einem Bewegungserteil-Mechanismus (9, 12) für das Verschiebungsmittel (25) bereitgestellt wird.

17. Rahmenkonstruktion gemäß den Ansprüchen 1-16 **dadurch gekennzeichnet, dass** die oberen Enden der vertikalen Rahmenelemente (3) mit Rollmitteln bereitgestellt sind, welche sich entlang einer Führung (21, 22) bewegen, welche sich auf einem äußeren Strukturelement befindet.

18. Rahmenkonstruktion gemäß den Ansprüchen 1-17, **dadurch gekennzeichnet, dass** die unteren Enden der vertikalen Rahmenelemente (3) mit Rollmitteln bereitgestellt werden, welche sich entlang einer Führung (20) bewegen, welche sich auf einem äußeren Strukturelement befindet.

19. Rahmenkonstruktion gemäß den Ansprüchen 1-18, **dadurch gekennzeichnet, dass** ein Ende von oder beide Enden von den horizontalen Rahmenelementen (2) der Rahmenkonstruktion mit Rollmitteln bereitgestellt werden, welche sich entlang einer Führung (22, 24) bewegen, welche sich auf einem externen Strukturelement befindet.

20. Rahmenkonstruktion gemäß den Ansprüchen 18-19, **dadurch gekennzeichnet, dass** eines oder mehrere der Rahmenelemente (2, 3) in Bezug auf eines oder mehrere sich außen befindende Strukturelemente vorgespannt sind.

## Revendications

1. Ossature, pour fixer plusieurs panneaux structurels dans une relation matricielle, qui consiste en plusieurs éléments d'encadrement horizontaux (2) et en plusieurs éléments d'encadrement verticaux (3), qui forment ensemble dans l'ossature une matrice d'ouvertures (4) dans lesquelles les panneaux structurels peuvent être insérés de façon amovible, les éléments d'encadrement verticaux et/ou horizontaux pouvant être étendus dans leur direction longitudinale sensiblement au niveau de chacune des ouvertures dans l'ossature ;
**caractérisée en ce que** les éléments d'encadrement pouvant être étendus sont composés de plusieurs éléments secondaires (2a à 2d, 3a à 3d) qui peuvent être mutuellement déplacés dans leur direction longitudinale les uns par rapport aux autres par un ou plusieurs moyens de déplacement (25), et **en ce que** l'ossature, au moins au niveau d'un de ses bords extérieurs, est reliée à un élément structurel allongé (1) qui s'étend d'un bout à l'autre d'au moins des parties de l'extrémité extérieure respective de l'ossature, et **en ce qu'**un ou plusieurs mécanismes de transmission de mouvement (6, 7, 8, 9) sont prévus pour les moyens de déplacement.

2. Ossature selon la revendication 1, **caractérisée en ce que** les panneaux structurels sont des corps sensiblement plats comprenant une ou plusieurs faces d'exposition.

3. Ossature selon la revendication 1, **caractérisée en ce que** les panneaux structurels sont des corps sensiblement plats comprenant un ou plusieurs panneaux de cellules solaires.

4. Ossature selon les revendications 1 à 3, **caractérisée en ce que** les éléments secondaires verticaux (3a à 3d) sont réalisés sous la forme de corps allongés ayant une ouverture traversante (31, 32) au niveau de chaque extrémité dans la direction longitudinale de l'élément secondaire.

5. Ossature selon la revendication 4, **caractérisée en ce que** les éléments secondaires dans la direction verticale et/ou horizontale sont formés en ayant un ou plusieurs guides longitudinaux (2a, 2b, 2c, 2d, 3a', 3b', 3c') dans la direction longitudinale pour tout ou partie des moyens de déplacement (25).

6. Ossature selon les revendications 1 à 5, **caractérisée en ce que** les moyens de déplacement (25) dans un ou plusieurs des éléments d'encadrement verticaux (3) s'étendent sensiblement sur la totalité de la longueur de l'élément d'encadrement.

7. Ossature selon les revendications 4 à 6, **caractérisée en ce que** les éléments secondaires verticaux (3a à 3d) se chevauchent avec une ouverture traversante, de sorte que l'ouverture traversante inférieure (32) dans un élément secondaire chevauche l'ouverture traversante supérieure (31) dans l'élément situé au-dessous.

8. Ossature selon les revendications 4 à 7, **caractérisée en ce que** l'étendue dans la direction longitudinale de l'ouverture totale produite par les ouvertures se chevauchant (31, 32) dans chaque extrémité des éléments secondaires verticaux (3a à 3d) correspond sensiblement à l'extension maximale dans la direction longitudinale d'un élément d'encadrement vertical (3) au niveau de chaque ouverture (4) dans l'ossature.

9. Ossature selon la revendication 1, **caractérisée en ce que** les éléments secondaires horizontaux (2a, 2b, 2c, 2d) passent à travers les ouvertures se chevauchant (31, 32) dans les éléments secondaires verticaux (3a à 3e).

10. Ossature selon la revendication 9, **caractérisée en ce que** les éléments secondaires horizontaux (2a, 2b, 2c, 2d) sont conçus de manière complémentaire au niveau de leurs extrémités opposées et **en ce qu'**ils se chevauchent d'un bout à l'autre d'une zone correspondant au moins à la plus grande extension souhaitable des éléments d'encadrement horizontaux respectifs (2) au niveau d'une ouverture (4) dans l'ossature.

11. Ossature selon la revendication 10, **caractérisée en ce que** la conception complémentaire des éléments secondaires horizontaux (2a, 2b, 2c, 2d) comprend une ouverture longitudinale (30) dans la direction longitudinale de préférence au niveau de l'extrémité d'un élément et une partie en saillie ou crochet (29) sur l'élément conçu de manière complémentaire qui met en prise l'ouverture longitudinale, où le déplacement libre de la partie en saillie ou crochet dans l'ouverture correspond à l'extension de l'élément d'encadrement horizontal (3) au niveau de l'ouverture (4) dans l'ossature.

12. Ossature selon les revendications 1 à 11, **caractérisée en ce que**, au niveau d'un ou de l'ensemble de ses bords latéraux, d'un bout à l'autre de tout ou partie de l'étendue du bord latéral, elle est munie d'un ou plusieurs éléments structurels couvrants (19c, 19d) s'étendant dans le sens s'écartant de l'avant des panneaux structurels dans l'ossature.

13. Ossature selon les revendications 1 à 12, **caractérisée en ce que** le long de tout ou partie de l'étendue longitudinale du côté supérieur, elle est munie d'un ou plusieurs éléments structurels couvrants (19a) s'étendant dans le sens s'écartant de l'avant des panneaux structurels dans l'ossature.

14. Ossature selon les revendications 1 à 13, **caractérisée en ce que** le moyen de déplacement (25) de l'ossature est formé par un corps allongé ou par plusieurs corps allongés successifs comme un fil, une corde, un câble ou analogue, et **en ce que** le mécanisme de transmission de mouvement (6, 7, 8, 9) de l'ossature est un treuil comportant un tambour pour enrouler le moyen de déplacement.

15. Ossature selon les revendications 1 à 13, **caractérisée en ce que** le moyen de déplacement de l'ossature consiste en une ou plusieurs crémaillères et **en ce que** le mécanisme de transmission de mouvement de l'ossature est un pignon associé.

16. Ossature selon les revendications 1 à 15, **caractérisée en ce que**, au niveau de son bord inférieur, elle est munie d'un mécanisme de transmission de mouvement (9, 12) pour le moyen de déplacement (25).

17. Ossature selon les revendications 1 à 16, **caractérisée en ce que** les extrémités supérieures des éléments d'encadrement verticaux (3) sont munies de moyens de roulement qui se déplacent le long d'un guide (21, 22) situé sur un élément structurel externe.

18. Ossature selon les revendications 1 à 17, **caractérisée en ce que** les extrémités inférieures des éléments d'encadrement verticaux (3) sont munies de moyens de qui se déplacent le long d'un guide (20) situé sur un élément structurel externe.

19. Ossature selon les revendications 1 à 18, **caractérisée en ce qu'**une extrémité, ou les deux extrémités, des éléments d'encadrement horizontaux (2) de l'ossature sont munies de moyens de roulement qui se déplacent le long d'un guide (22, 24) situé sur un élément structurel externe.

20. Ossature selon les revendications 18 et 19, **caractérisée en ce qu'**un ou plusieurs des éléments d'encadrement (2, 3) sont précontraints par rapport à un ou plusieurs éléments structurels situés à l'extérieur.
